(19) Europäisches Patentamt
European Patent Office
Office européen des brevets

(11) EP 2 087 574 B1

(12) **FASCICULE DE BREVET EUROPEEN**

(45) Date de publication et mention
de la délivrance du brevet:
**07.01.2015 Bulletin 2015/02**

(21) Numéro de dépôt: **07870241.2**

(22) Date de dépôt: **05.11.2007**

(51) Int Cl.:
**H02J 7/00** *(2006.01)*    **H01M 10/44** *(2006.01)*

(86) Numéro de dépôt international:
**PCT/FR2007/001821**

(87) Numéro de publication internationale:
**WO 2008/065273 (05.06.2008 Gazette 2008/23)**

(54) **PROCEDE DE GESTION DE CHARGE D'UNE BATTERIE RECHARGEABLE**

VERFAHREN ZUR LADUNGSVERWALTUNG EINER WIEDERAUFLADBAREN BATTERIE

METHOD FOR MANAGING CHARGING OF A RECHARGEABLE BATTERY

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **06.11.2006 FR 0609688**

(43) Date de publication de la demande:
**12.08.2009 Bulletin 2009/33**

(73) Titulaire: **Commissariat à l'Énergie Atomique
et aux Énergies Alternatives
75015 Paris (FR)**

(72) Inventeurs:
• **KAROUI, Fathia
F-69100 Villeurbanne (FR)**

• **LEMAIRE, Elisabeth
38490 Chimilin (FR)**
• **LEFROU, Christine
38000 Grenoble (FR)**

(74) Mandataire: **Hecké, Gérard et al
Cabinet Hecké
10, rue d'Arménie
Europole
BP 1537
38025 Grenoble Cedex 1 (FR)**

(56) Documents cités:
**WO-A1-03/030331      FR-A1- 2 870 391
US-A1- 2005 134 231**

## Description

### Domaine technique de l'invention

L'invention concerne un procédé de gestion de charge d'une batterie rechargeable, comportant au moins une phase de charge, et éventuellement une phase préalable d'estimation de l'état de charge de la batterie.

### État de la technique

La charge ou la recharge d'une batterie est classiquement réalisée sous le contrôle d'un régulateur de charge. Les divers modes de gestion de charge d'une batterie actuellement utilisés sont fondés soit sur la mesure de la tension aux bornes de la batterie soit sur la mesure du courant de charge de la batterie, et diffèrent par le critère de fin de charge utilisé.

Un premier mode de gestion connu est de type connexion/déconnexion ("On/Off"), basé sur l'interruption de la charge lorsque la tension atteint un seuil haut et sa reprise lorsque la tension atteint un seuil de tension de reconhexion. Dans ce mode de gestion, facile à mettre en oeuvre, les seuils de tension sont souvent mal ajustés et il est difficile d'atteindre la charge complète de la batterie. En effet, un ajustement optimal de ces seuils de tension est très délicat. Si ces seuils de tension tiennent compte en effet de la technologie de la batterie ou encore du dimensionnement du système, ils sont néanmoins maintenus constants durant toute la durée de fonctionnement de la batterie. Or, la tension d'une batterie dépend à la fois de sa technologie, mais également de ses conditions de fonctionnement, à savoir le courant de charge ou de décharge, la période de relaxation, la température, et pour finir de son état de santé, ou état d'usure SOH (« state of health » en anglais).

Un autre mode de gestion appelé « floating » consiste en l'application d'un courant constant jusqu'à une certaine valeur de tension et puis le maintien de cette tension pendant un certain temps afin de finir la charge de la batterie. Le temps pendant lequel le courant est maintenu n'est pas bien optimisé et ce type de gestion, même s'il diminue le phénomène de dégazage, par exemple pour les batteries au plomb, conduit souvent à la corrosion de la grille positive et donc à la dégradation de la batterie. Le temps de recharge de la deuxième phase reste très long car la valeur de courant est très faible. Le critère de fin de charge n'est donc pas satisfaisant et reste imprécis.

D'autres méthodes de gestion sont basées sur le comptage des ampères-heures introduits dans la batterie. Cette méthode de gestion consiste à prédéterminer la quantité de charge à fournir à la batterie pour la recharger pleinement. Un coefficient de surcharge est souvent appliqué de sorte à compenser le courant utilisé par les réactions parasites (par exemple celle de l'électrolyse de l'eau dans le cas des batteries à électrolyte aqueux), au détriment de la réaction principale. L'optimisation du coefficient de surcharge est très délicate et le calcul des ampères-heures demeure imprécis à cause de la dérive de la mesure de courant. Le critère de fin de charge reste non optimisé, ce qui conduit dans la plupart des cas à une surcharge excessive de la batterie conduisant à une détérioration de la batterie.

Une autre méthode de gestion utilisée notamment pour la charge rapide des véhicules électriques consiste en l'utilisation d'un courant pulsé. Par exemple, le document US2004/0032237 décrit une méthode de charge par l'application de créneaux positifs et de créneaux négatifs de décharge. Les paramètres de ces créneaux, c'est-à-dire la largeur et l'amplitude des impulsions, sont ajustés pour maintenir le niveau de la tension de charge à une valeur maximale d'approximativement 1 V. Le régulateur utilise la tension comme critère de fin de charge. Ce critère dépend essentiellement de l'état de santé SOH de la batterie et de sa résistance interne, ce qui le rend variable, imprécis et mal adapté. Dans un autre exemple, le document WO2005/114808 décrit une méthode de gestion de charge par application d'un courant périodique, dans laquelle le point de polarisation maximale est utilisé comme critère de fin de charge. Ce point est calculé par soustraction de deux filtres gaussiens de la réponse en tension. Cette méthode reste compliquée et nécessite un système d'analyse de données performant.

Le brevet WO2005/101042 décrit quant à lui une méthode d'estimation de l'état de charge SOC (« state of charge » en anglais) basée par exemple sur la mesure de la tension après un temps de relaxation. L'inconvénient de cette méthode est la nécessité de connaître plusieurs paramètres de l'état de la batterie : la résistance interne, la tension à l'abandon, la tension et le courant appliqué et le rapport entre la puissance introduite et celle introduite à la charge précédente. Le temps de relaxation peut être assez long, de l'ordre de 2 heures dans le cas de batteries au plomb, ce qui présente un inconvénient pour l'application pratique d'une telle méthode. Bien que présentant une bonne précision pour l'estimation de la SOC des batteries NiMH, cette méthode est difficilement applicable, en pratique, pour former un critère de fin de charge.

FR2870391 décrit un procédé de charge d'une batterie par des impulsions rectangulaires de courant. Sur chaque période, une valeur de pente de la tension est calculée.

### Objet de l'invention

L'objet de l'invention consiste à réaliser un procédé de gestion de charge d'une batterie rechargeable remédiant aux inconvénients de l'art antérieur, en particulier utilisant un critère de fin de charge et/ou un critère d'estimation de l'état de charge qui soient simples, précis et rapides.

Selon l'invention, ce but est atteint par le fait que la phase de charge comprend au moins :

- une étape de charge par impulsions rectangulaires périodiques de courant, prenant alternativement une première amplitude pendant une première période et une deuxième amplitude pendant une deuxième période,
- la mesure périodique de la tension aux bornes de la batterie,
- le calcul, à partir desdites mesures de tension, d'une valeur de pente représentative de la variation de la tension en fonction du temps,
- la comparaison de la valeur absolue de la pente à la fin de chaque période avec un seuil prédéterminé de pleine charge représentatif de la pleine charge de la batterie,
- et l'interruption de ladite étape de charge par impulsions de courant lorsque ladite valeur absolue de la pente est supérieure ou égale audit seuil de pleine charge.

Le critère de fin de charge utilisé dans ce procédé est la comparaison, avec un seuil prédéterminé de pleine charge, de la valeur absolue de la pente de la tension aux bornes de la batterie mesurée lors de l'application d'impulsions de courant.

L'invention a également pour objet un procédé de gestion de la charge comprenant une phase préalable d'estimation de l'état de charge de la batterie, dans laquelle le critère d'estimation de l'état de charge, c'est-à-dire le critère de passage à la phase de charge, est analogue au précédent, à savoir la comparaison, avec un seuil prédéterminé de pleine charge, de la valeur absolue de la pente de la tension aux bornes de la batterie mesurée lors de l'application d'impulsions de courant.

**Description sommaire des dessins**

D'autres avantages et caractéristiques ressortiront plus clairement de la description qui va suivre d'un mode particulier de réalisation de l'invention donné à titre d'exemple non limitatif et représenté aux dessins annexés, dans lesquels :

- la figure 1 illustre schématiquement les variations, en fonction du temps, du courant de charge I d'une batterie chargée pendant la phase de charge du procédé selon l'invention, ainsi que les variations correspondantes de la tension U,
- la figure 2 illustre les variations, en fonction du temps, de la tension U aux bornes de la batterie chargée par le procédé selon l'invention, pendant l'étape de charge par impulsions de courant,
- la figure 3 illustre la réponse en tension de batteries à des impulsions de courant pour différents états de charge,
- les figures 4 à 7 représentent des organigrammes d'un mode préférentiel de réalisation du procédé selon l'invention.

**Description d'un mode préférentiel de l'invention**

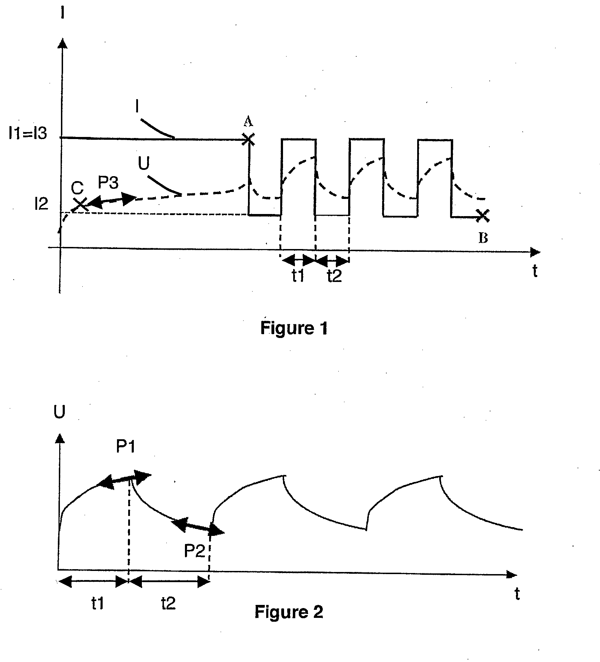

Dans le mode préféré de réalisation représenté sur les figures, une batterie présentant un état de charge inférieur à 100% est chargée dans une phase de charge qui sera décrite ci-après. Dans cette phase de charge, représentée sur la figure 1, le courant de charge I de la batterie est un courant pulsé entre des instants A et B, après application d'un courant d'amplitude constante I3 jusqu'à l'instant A. Le courant pulsé est classiquement constitué par des impulsions rectangulaires périodiques de courant, prenant alternativement une première amplitude I1, pendant une première période t1, et une seconde amplitude I2, inférieure à la première, pendant une seconde période t2.

Dans l'exemple illustré, l'application du courant constant à la valeur I3 constitue une étape de charge à courant constant. Cette étape est suivie, après le point A, d'une étape de charge par impulsions de courant aux amplitudes I1 et I2. Ces deux étapes constituent la phase de charge du procédé de gestion de charge ici décrit.

Comme l'illustre la figure 1, la valeur I3 est égale à la valeur I1, mais dans d'autres modes de réalisation, I3 peut présenter une valeur différente, en fonction du type de charge à courant constant souhaitée, en fonction du type de batterie ou du temps de charge total désiré.

Comme illustré à la figure 2, une valeur de pente P de la tension U, mesurée périodiquement aux bornes de la batterie à charger, est calculée au moins à la fin de chaque période t1, t2 (P1 à la fin de la période t1 et P2 à la fin de la période t2). La valeur de pente P est représentative de la variation de la tension U en fonction du temps. En pratique, la pente P est calculée périodiquement par tout moyen adapté pendant l'étape de charge par impulsions de courant, et seules les valeurs calculées à la fin des périodes t1 et t2 successives sont prises en compte dans le procédé.

Pour déterminer, en temps réel, si l'état de charge de la batterie, pendant l'étape de charge par impulsions de courant, correspond à un état de pleine charge de la batterie, la valeur absolue de la pente P calculée ci-dessus à la fin de chaque période t1, t2 est comparée à un seuil prédéterminé de pleine charge, par exemple de 300mV/s, représentatif de la pleine charge de la batterie. Si la valeur absolue de la pente P est supérieure au seuil de pleine charge, l'étape de charge par impulsions de courant est interrompue.

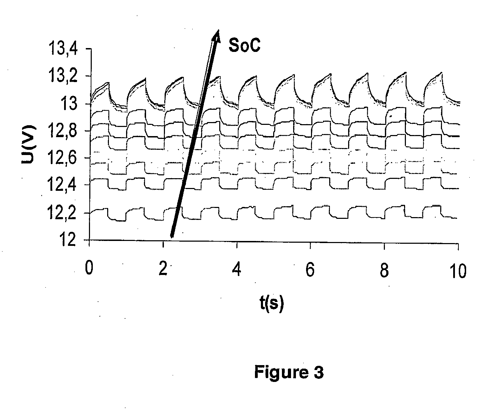

En effet, comme représenté sur la figure 3, la forme de la réponse en tension aux bornes d'une batterie, mesurée lors de l'application d'impulsions de courant, varie en fonction de l'état de charge SOC de cette dernière. En particulier, la valeur absolue de la pente en fin de chaque période augmente avec l'état de charge SOC. Sur la figure 3, plus l'état de charge SOC est élevé, plus l'ordonnée de la valeur moyenne de la réponse en tension est élevée. Le seuil prédéterminé de pleine charge correspond à la valeur absolue de la pente P lorsque l'état de charge SOC de la batterie est de 100% (voir la courbe la plus au-dessus du graphe).

Pendant l'étape de charge à courant constant I3, c'est-à-dire avant le point A de la figure 1, la valeur de pente P (repérée P3 pendant cette étape) de la tension U mesurée périodiquement, est calculée périodiquement. Après un temps prédéterminé (typiquement 2 minutes par rapport à l'application de I3) ou l'enregistrement d'un changement de pente (après le point C de la figure 1), la valeur absolue de la pente P3 calculée est ensuite comparée à une plage prédéterminée, par exemple comprise entre 1 mV/s et 6mV/s. Le passage à l'étape de charge par impulsions de courant (point A) intervient lorsque la valeur absolue de P3 entre dans ladite plage prédéterminée.

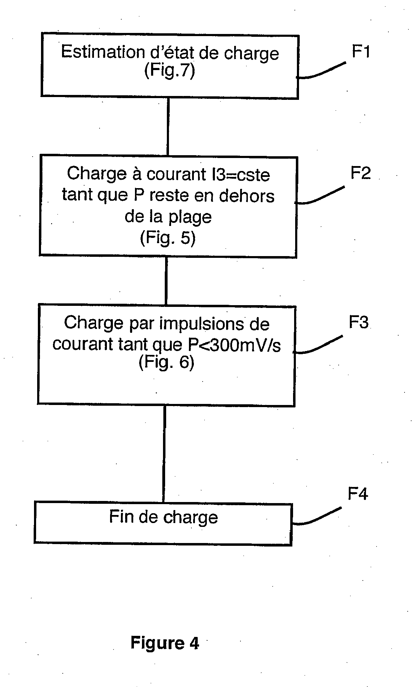

Les figures 4 à 7 illustrent un exemple d'organigrammes du mode de réalisation-ci dessus, qui peut être mis en oeuvre par tout régulateur de charge de type connu.

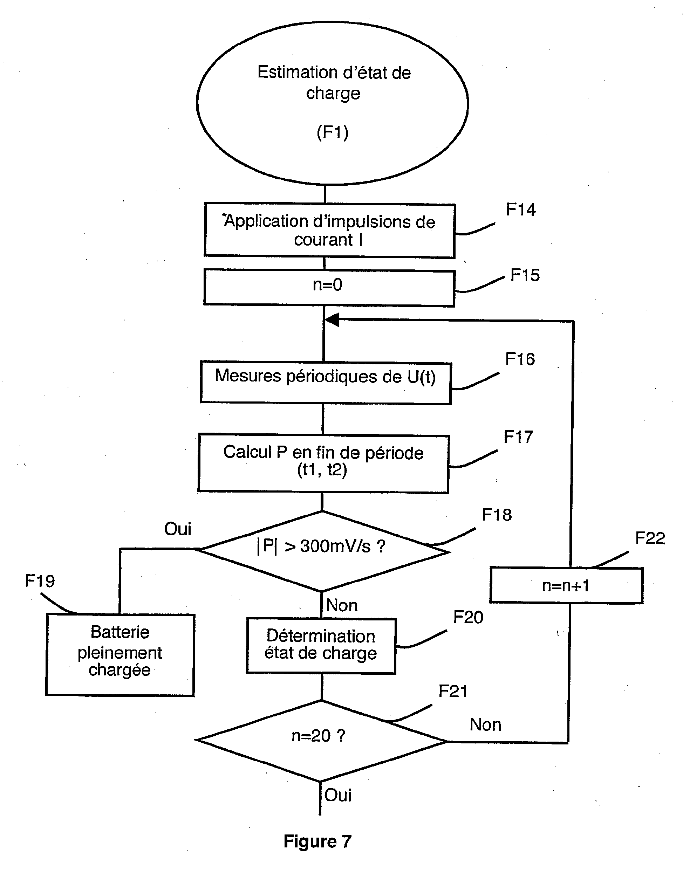

Comme illustré à la figure 4, dans une première étape F1, illustrée plus en détail à la figure 7, l'état de charge est estimé pour une batterie dont l'état de charge est inconnu, de manière à déterminer si le régulateur de charge doit appliquer, ou non, à cette batterie, la phase de charge qui est décrite ci-dessous. Le régulateur de charge passe aux étapes suivantes du procédé s'il constate que la batterie n'est pas pleinement chargée.

Sur la figure 4, après l'étape d'estimation d'état de charge F1, le régulateur de charge passe à une étape F2 de charge de la batterie à courant constant à la valeur I3 s'il a déterminé, à l'étape F1, que la batterie n'était pas pleinement chargée. Le régulateur reste à l'étape F2 tant que la valeur de pente P3 de la tension aux bornes de la batterie, mesurée périodiquement, reste, en valeur absolue, en dehors d'une plage prédéterminée, de préférence comprise entre 1 mV/s et 6mV/s. La charge de la batterie à courant constant I3 est interrompue lorsque la valeur absolue de la pente P3 de la tension U aux bornes de la batterie entre dans la plage correspondante.

Lorsque l'étape F2 est interrompue par l'entrée de la valeur absolue de la pente P3 (ou plus généralement P) dans la plage correspondante, le régulateur contrôle, dans une étape F3, la charge de la batterie avec un courant pulsé. Le courant pulsé correspond à l'application d'impulsions rectangulaires périodiques de courant, ayant une première amplitude I1 pendant une première période t1, et une première amplitude I2 pendant une seconde période t2. I2 est avantageusement nulle mais elle peut aussi être non nulle. L'étape F3 est réalisée par le régulateur tant que la valeur absolue de la pente P1, P2 (ou plus généralement P) calculée à la fin de chaque période t1, t2 reste inférieure à un seuil prédéterminé de pleine charge, de préférence égal à 300mV/s. Ce seuil correspond physiquement, comme expliqué précédemment, à un état de charge SOC de la batterie de l'exemple égal à 100%.

Lorsque l'étape F3 est interrompue par l'égalité ou le dépassement de la valeur absolue de pente P1, P2 (ou plus généralement P), calculée à la fin de chaque période t1, t2, par rapport au seuil prédéterminé de 300mV/s, le régulateur passe à une étape F4 de fin de charge et la batterie est considérée comme pleinement chargée.

Des exemples de réalisation des étapes F1 à F3 sont illustrés plus en détail respectivement sur les figures 7, 5 et 6.

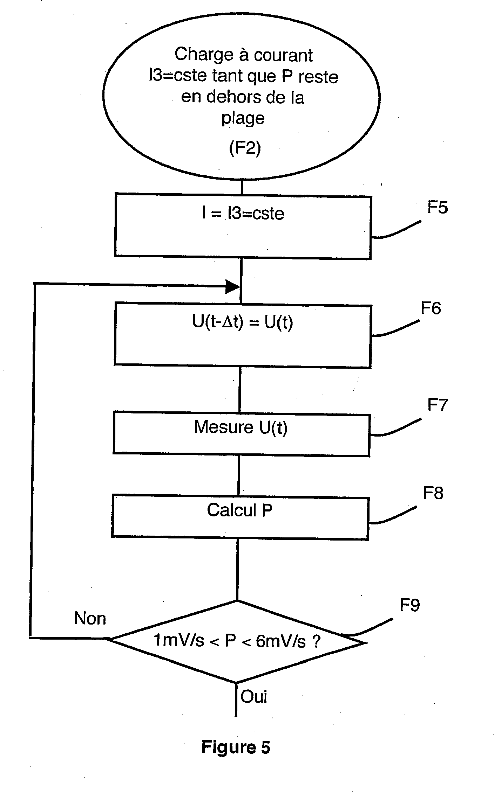

Comme représenté à la figure 5, l'étape F2 de charge à courant constant I3 peut comporter tout d'abord, dans une étape F5, la détermination de la valeur I3 du courant de charge I en fonction du type de batterie à charger et de l'application envisagée pour cette batterie et/ou du temps de charge désiré. Dans la même étape F5, le régulateur fixe à la valeur I3, préalablement déterminée dans la même étape, l'amplitude I du courant de charge (I=I3). L'étape F5 est suivie d'une étape F6, dans laquelle le régulateur sauvegarde la valeur de la tension U(t) précédemment mesurée de la tension : U(t-$\Delta$t)=U(t). Puis, dans une étape F7, une nouvelle mesure de tension U(t) est enregistrée avant le calcul, dans une étape F8, de la valeur de pente P (c'est-à-dire P3 sur la figure 1). La valeur absolue de la valeur de pente P calculée est ensuite comparée, dans une étape F9, à une plage prédéterminée de valeurs. Sur la figure 5, par exemple, le régulateur vérifie si la valeur absolue de la pente P est comprise entre 1 mV/s et 6mV/s. Si ce n'est pas le cas (sortie Non de F9), le régulateur se reboucle sur l'étape F6. Il continue donc d'appliquer le courant d'amplitude constante I3, inchangée, à la batterie et sauvegarde la valeur de la tension précédemment mesurée, avant de mesurer une nouvelle valeur de tension pour calculer une nouvelle valeur de P. La succession d'étapes F6 à F9 se répète tant que la valeur de pente P reste en dehors de la plage et, pendant toute cette étape de charge à courant constant I3, les mesures successives de la tension U(t) sont réalisées à des intervalles de temps prédéterminés $\Delta$t. L'évolution dans le temps de la tension U ainsi obtenue est alors optimale. La valeur de pente P peut alors être calculée en prenant la valeur absolue du rapport entre la différence entre deux valeurs successives de la tension mesurée et du temps $\Delta$t écoulé entre ces deux mesures :

$$P = \left| (U(t) - U(t-\Delta t)) / \Delta t \right|.$$

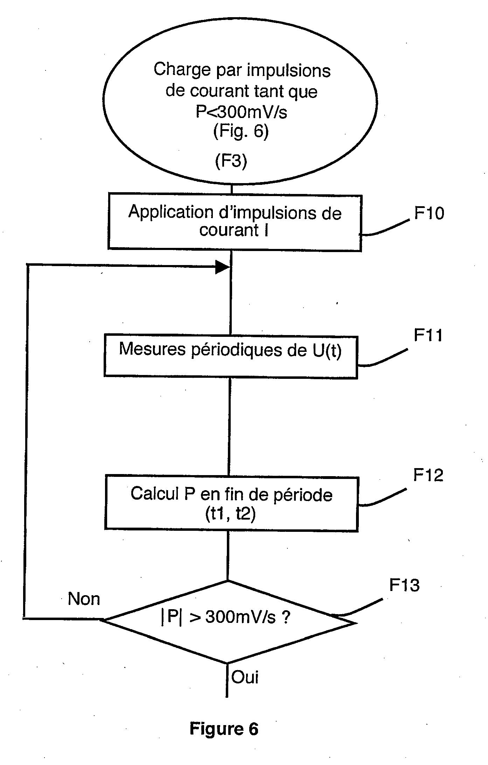

Lorsque, dans l'étape F9, le régulateur constate que la valeur absolue de la pente P est entrée dans la plage prédéterminée (sortie Oui de l'étape F9), l'étape F2 se termine et le régulateur passe alors à l'étape F3. Comme représenté à la figure 6, l'étape F3 peut commencer par une étape F10 dans laquelle le régulateur détermine et applique les valeurs I1 et I2 des amplitudes des impulsions rectangulaires du courant de charge I qui est appliqué dans l'étape de charge par impulsions de courant. Ces valeurs I1 et I2 sont par exemple fonction du type de batterie à charger et de l'application envisagée pour cette batterie et/ou du temps de charge désiré.

Dès que la batterie est soumise à la première impulsion de courant (laquelle, dans l'exemple illustré à la figure 1, correspond à une impulsion d'amplitude 12), c'est-à-dire, dans cet exemple, au début de la première deuxième période t2 (voir figure 2 au niveau du point A), le régulateur passe à une étape F11, dans laquelle le régulateur réalise des mesures périodiques de la tension U(t) aux bornes de la batterie en cours de charge. La tension U(t) évolue alors en réponse aux impulsions de courant et le profil de U(t) est similaire à la courbe de la figure 2 et à celle de la figure 1 après le point A.

Le régulateur passe ensuite à l'étape F12 dans laquelle la valeur de pente P est calculée en fin de période, ici t2 (P2 de la figure 2). La valeur absolue de la valeur de pente P calculée à l'étape F12 à la fin de la période t2 est ensuite comparée, dans une étape F13, au seuil de pleine charge de 300mV/s. Si la valeur absolue de P est inférieure à 300mV/s, (sortie Non de F13), le régulateur se reboucle sur l'étape F11. Le régulateur continue d'appliquer le courant puisé à la batterie et assure de nouvelles mesures de la tension U(t) sur la période suivante, ici t1, pour calculer une nouvelle valeur de P à la fin de cette période. La succession d'étapes F11 à F13 se répète à la fin de chaque période t1, t2 tant que la valeur absolue de la valeur de pente P est inférieure à 300mV/s et, pendant toute cette étape de charge à courant pulsé, les mesures successives de la tension U(t) sont réalisées à des intervalles de temps prédéterminés Δt.

Lorsque, dans l'étape F13, le régulateur constate que la valeur absolue de la pente P devient supérieure à 300mV/s (sortie Oui de l'étape F13), l'étape F3 se termine et le régulateur passe alors à l'étape F4 de fin de charge et la batterie est considérée comme pleinement chargée.

Dans une première étape F1 (figure 1), illustrée plus en détail à la figure 7, l'état de charge est estimé pour une batterie dont l'état de charge est inconnu, de manière à déterminer si le régulateur de charge doit appliquer, ou non, à cette batterie, les étapes F2 à F4 ou plus précisément les étapes F5 à F13.

Comme illustré à la figure 7, l'étape F1 d'estimation de l'état de charge de la batterie comporte tout d'abord une étape F14 dans laquelle le régulateur détermine et applique les valeurs des amplitudes I4 et I5 des impulsions rectangulaires d'un courant de test (non représenté) qui est appliqué dans la phase d'estimation de l'état de charge. Le courant pulsé de test est classiquement constitué par des impulsions rectangulaires périodiques de courant, prenant alternativement une première amplitude 14, pendant une première période t3, et une seconde amplitude 15, inférieure à la première 14, pendant une seconde période t4. Ces valeurs 14 et 15 sont par exemple fonction du type de batterie à charger et de l'application envisagée pour cette batterie. Par exemple, 14 et 15 peuvent respectivement être égales à I1 et 12. De manière analogue, t3 et t4 peuvent respectivement être égales à t1 et t2.

Dès que la batterie est soumise à la première impulsion de courant de test, le régulateur passe à une étape F15 dans laquelle un nombre n est mis à zéro, puis à une étape F16 dans laquelle le régulateur réalise des mesures périodiques de la tension U(t) aux bornes de la batterie en cours de test. La tension U(t) évolue alors en réponse aux impulsions de courant de test d'amplitudes 14, 15 et le profil de U(t) est, de manière analogue à l'application d'impulsions de courant de charge d'amplitudes I1, I2, similaire à la courbe de la figure 2 et à celle de la figure 1 après la point A.

Le régulateur passe ensuite à l'étape F17 dans laquelle la valeur de pente P, représentative de la variation de la tension en fonction du temps, est calculée en fin de période. La valeur absolue de la valeur de pente P calculée à l'étape F17 à la fin de la première période t3 ou t4 (suivant que le courant de test appliqué débute par une impulsion d'amplitude 14 ou bien une impulsion d'amplitude 15) est ensuite comparée, dans une étape F18, au seuil de pleine charge de 300mV/s. Si la valeur absolue de P est supérieure à 300mV/s, (sortie Oui de F18), le régulateur passe à une étape F19 correspondant à un état de charge de la batterie d'au moins 100%.

Par contre, si la valeur absolue de P est inférieure à 300mV/s, (sortie Non de F18), le régulateur passe à une étape F21 dans laquelle le régulateur vérifie si le nombre n est égal à un nombre prédéterminé, par exemple 20. Une étape F20 peut éventuellement être intercalée entre les étapes F18 et F21, dans laquelle l'état de charge de la batterie testée est déterminé par comparaison de la valeur absolue de la pente P, calculée à l'étape 17, avec une table prédéterminée qui associe l'état de charge normal d'une batterie en fonction de la valeur absolue de la pente, en fin de période, de la réponse en tension à un courant pulsé. Cette détermination peut correspondre à des critères de décision d'opérations ultérieures à pratiquer sur la batterie, comme par exemple un boost de charge ou la réhabilitation de la batterie.

Lorsque, dans l'étape F21, le régulateur constate que le nombre n est inférieur à 20 (sortie Non de l'étape F21), il se reboucle sur l'étape F16 en pratiquant au préalable une étape F22 d'incrémentation du nombre n (n=n+1). Le régulateur continue d'appliquer le courant puisé de test à la batterie et assure de nouvelles mesures de la tension U(t) sur la période suivante, pour calculer une nouvelle valeur de P à la fin de cette période. La succession d'étapes F16 à F21 se répète à la fin de chaque période t3, t4 tant que le nombre n est inférieur à 20.

Lorsque, dans l'étape F21, le régulateur constate que le nombre n est égal à 20 (sortie Oui de l'étape F21), l'étape F1 se termine et le régulateur passe alors à l'étape F2 de charge à courant constant 13 et la phase de charge débute.

L'étape F1, qui comprend par exemple les étapes F14 à F22, constitue une phase d'estimation de l'état de charge de la batterie dont l'état de charge est inconnu et qui est éventuellement à charger. Le principe d'incrémentation du nombre n est un exemple de réalisation qui permet de s'assurer, qu'en pratique, la décision du passage à la phase de charge est prise après un petit nombre (20 dans l'exemple ci-dessus) d'impulsions de courant de test, suffisant pour s'affranchir de tout risque d'anomalie ou d'erreur. Pour des impulsions de test de 1 Hz de fréquence, le seuil 20 pour le nombre n correspond à une durée de 10s pour la phase d'estimation de l'état de charge de la batterie. Il est ainsi possible d'avoir une estimation rapide de l'état de charge d'une batterie.

Lors de l'application pratique du procédé, pendant une période t1 à t4, la tension varie d'abord très rapidement avec une valeur absolue de pente P élevée, puis présente au moins une rupture de pente. La pente P (P1, P2, P3) à prendre en considération dans l'application du procédé de l'invention est celle mesurée à la fin de la période ou plus généralement dans la dernière partie de la période après la rupture de pente. La décision de la pente à utiliser, pour chaque période, peut se faire en fonction du temps, ou après la détection d'une rupture de pente (ce qui implique plusieurs mesures de la pente) ou simplement en prenant la dernière mesure effectuée durant la période. La dernière solution est la plus simple à mettre en oeuvre. D'autre part, on veillera à appliquer la même méthode sur toutes les périodes.

Le procédé de gestion de charge décrit ci-dessus comporte ainsi une étape de charge par impulsions de courant, comportant la mesure de la tension U aux bornes de la batterie, la détermination de la pente P de la tension U à la fin de chaque période, la comparaison de la valeur absolue de la pente P de la tension U à un seuil prédéterminé de pleine charge et l'interruption de la charge lorsque la valeur absolue de la pente P est supérieure à ce seuil.

Ce procédé de gestion de charge, utilisant comme critère de fin de charge la valeur absolue de la pente P de la tension U aux bornes de la batterie lors de l'application d'un courant pulsé I, est, de préférence, utilisé avec une phase préalable d'estimation de l'état de charge utilisant le même critère. Il peut néanmoins être utilisé avec d'autres procédés d'estimation de l'état de charge utilisant d'autres critères.

Parallèlement, la phase d'estimation de la charge décrite ci-dessus, c'est-à-dire utilisant comme critère d'estimation de l'état de charge la valeur absolue de la pente de la réponse en tension à quelques impulsions de courant de test, peut être utilisée en association avec tout type de procédé de gestion de charge, qu'il utilise ou non le critère de fin de charge décrit ci dessus.

Ainsi, le critère de fin de charge du procédé de gestion de charge et le critère de passage à la phase de charge dans une phase préalable d'estimation de charge appliquée à une batterie dont l'état de charge est inconnu, sont analogues. Dans tous les cas, ce critère comporte la comparaison, avec un seuil prédéterminé de pleine charge, de la valeur absolue de la pente de la tension aux bornes de la batterie, mesurée lors de l'application d'impulsions de courant.

Tandis que dans le document WO2005/122319, les différents paramètres (amplitude et durée de chaque période) du courant de charge pulsé sont asservis en continu sur la pente de la tension, pour maintenir la pente P dans une plage comprise entre 1mV/s et 6mV/s pendant toute la phase de charge, selon la présente invention, la valeur de la pente de la tension est utilisée comme critère de fin de charge et/ou comme critère d'estimation de l'état de charge.

**Revendications**

1. Procédé de gestion de charge d'une batterie rechargeable, comportant au moins une phase de charge, comprenant ladite phase de charge au moins :

   - une étape de charge par impulsions rectangulaires périodiques de courant (F3), prenant alternativement une première amplitude (11) pendant une première période (t1) et une deuxième amplitude (12) pendant une deuxième période (t2), la deuxième amplitude étant inférieure à la première,
   - la mesure périodique de la tension aux bornes de la batterie,
   - le calcul, à partir desdites mesures de tension, d'une valeur de pente (P) représentative de la variation de la tension en fonction du temps, **caractérisé en ce que** ladite phase de charge comprend :
   - la comparaison de la valeur absolue de la pente (P) à la fin de chaque période (t1, t2) avec un seuil prédéterminé de pleine charge représentatif de la pleine charge de la batterie,
   - et l'interruption de ladite étape de charge par impulsions de courant (F3) lorsque ladite valeur absolue de la pente (P) est supérieure ou égale audit seuil de pleine charge.

2. Procédé selon la revendication 1, **caractérisé en ce que** le seuil de pleine charge est égal à 300mV/s.

3. Procédé selon l'une des revendications 1 et 2, **caractérisé en ce que** la phase de charge comporte, avant l'étape de charge par impulsions de courant (F3), une étape de charge à courant constant (F2), la valeur absolue de la pente (P) de la tension, mesurée périodiquement pendant ladite étape de charge à courant constant (F2), étant comparée à une plage prédéterminée et le passage à l'étape de charge par impulsions de courant (F3) intervenant lorsque la valeur absolue de la pente (P) entre dans ladite plage prédéterminée.

**4.** Procédé selon la revendication 3, **caractérisé en ce que** la plage prédéterminée est comprise entre 1 mV/s et 6mV/s.

**5.** Procédé selon l'une quelconque des revendications 1 à 4, **caractérisé en ce qu'**avant la phase de charge, le procédé comporte une phase préalable d'estimation de l'état de charge de la batterie, qui comporte :

- l'application de quelques impulsions rectangulaires périodiques de courant de test, prenant alternativement la première amplitude (I4) pendant la première période (t3) et la deuxième amplitude (I5) pendant la deuxième période (t4),
- la mesure périodique de la tension aux bornes de la batterie,
- le calcul, à partir desdites mesures de tension, de la valeur de pente (P) de la tension,
- la comparaison de la valeur absolue de la pente (P) avec ledit seuil de pleine charge,
- et le passage à la phase de charge lorsque ladite valeur absolue de la pente (P) est inférieure audit seuil de pleine charge.

**6.** Procédé de gestion de charge d'une batterie rechargeable comportant au moins une phase de charge et une phase préalable d'estimation de l'état de charge de la batterie, la phase préalable d'estimation de l'état de charge comportant :

- l'application de quelques impulsions rectangulaires périodiques de courant de test, prenant alternativement une première amplitude (I4) pendant une première période (t3) et une deuxième amplitude (15) pendant une deuxième période (t4), la deuxième amplitude étant inférieure à la première,
- la mesure périodique de la tension aux bornes de la batterie,
- le calcul, à partir desdites mesures de tension, d'une valeur de pente (P) de la tension, représentative de la variation de la tension en fonction du temps,
- la comparaison de la valeur absolue de la pente (P) avec un seuil prédéterminé de pleine charge,
- et le passage à la phase de charge lorsque ladite valeur absolue de la pente (P) est inférieure audit seuil de pleine charge.

**Patentansprüche**

**1.** Verfahren zum Lademanagement einer wiederaufladbaren Batterie, umfassend wenigstens eine Ladephase, wobei die Ladephase wenigstens umfasst:

- einen Ladeschritt mittels periodischer Rechteckstromimpulse (F3), die abwechselnd eine erste Amplitude (11) während eines ersten Zeitraums (t1) und eine zweite Amplitude (12) während eines zweiten Zeitraums (t2) annehmen, wobei die zweite Amplitude kleiner als die erste ist,
- das periodische Messen der Spannung an den Anschlüssen der Batterie,
- das Berechnen, anhand der Spannungsmessungen, eines Steilheitswertes (P), der für die Änderung der Spannung in Abhängigkeit von der Zeit repräsentativ ist, **dadurch gekennzeichnet, dass** die Ladephase umfasst:
- den Vergleich des Absolutwertes der Steilheit (P) am Ende eines jeden Zeitraums (t1, t2) mit einer vorbestimmten Vollladungsschwelle, die für die Vollladung der Batterie repräsentativ ist, und
- die Unterbrechung des Ladeschrittes mittels Stromimpulsen (F3), wenn der Absolutwert der Steilheit (P) über der Vollladungsschwelle liegt oder gleich dieser ist.

**2.** Verfahren nach Anspruch 1, **dadurch gekennzeichnet, dass** die Vollladungsschwelle gleich 300 mV/s ist.

**3.** Verfahren nach einem der Ansprüche 1 und 2, **dadurch gekennzeichnet, dass** die Ladephase vor dem Ladeschritt mittels Stromimpulsen (F3) einen Konstantstrom-Ladeschritt (F2) umfasst, wobei der Absolutwert der Steilheit (P) der Spannung, der während des Konstantstrom-Ladeschrittes (F2) periodisch gemessen wird, mit einem vorbestimmten Bereich verglichen wird und der Übergang zu dem Ladeschritt mittels Stromimpulsen (F3) dann stattfinden, wenn der Absolutwert der Steilheit (P) in den vorbestimmten Bereich gelangt.

**4.** Verfahren nach Anspruch 3, **dadurch gekennzeichnet, dass** der vorbestimmten Bereich zwischen 1 mV/s und 6 mV/s liegt.

**5.** Verfahren nach einem der Ansprüche 1 bis 4, **dadurch gekennzeichnet, dass** das Verfahren vor der Ladephase eine vorhergehende Phase zur Schätzung des Ladezustandes der Batterie umfasst, die umfasst:

- das Anlegen einiger periodischer rechteckiger Teststromimpulse, die abwechselnd die erste Amplitude (14) während des ersten Zeitraums (t3) und die zweite Amplitude (15) während des zweiten Zeitraums (t4) annehmen,
- das periodische Messen der Spannung an den Anschlüssen der Batterie,
- das Berechnen, anhand der Spannungsmessungen, des Steilheitswertes (P) der Spannung,

- den Vergleich des Absolutwertes der Steilheit (P) mit der Vollladungsschwelle und
- den Übergang zu der Ladephase, wenn der Absolutwert der Steilheit (P) unter der Vollladungsschwelle liegt.

6. Verfahren zum Lademanagement einer wiederaufladbaren Batterie, umfassend wenigstens eine Ladephase und eine vorhergehende Phase zur Schätzung des Ladezustandes der Batterie, wobei die vorhergehende Phase zur Schätzung des Ladezustandes umfasst:

    - das Anlegen einiger periodischer rechteckiger Teststromimpulse, die abwechselnd eine erste Amplitude (I4) während eines ersten Zeitraums (t3) und eine zweite Amplitude (I5) während eines zweiten Zeitraums (t4) annehmen, wobei die zweite Amplitude kleiner als die erste ist,
    - das periodische Messen der Spannung an den Anschlüssen der Batterie,
    - das Berechnen, anhand der Spannungsmessungen, eines Steilheitswertes (P) der Spannung, der für die Änderung der Spannung in Abhängigkeit von der Zeit repräsentativ ist,
    - den Vergleich des Absolutwertes der Steilheit (P) mit einer vorbestimmten Vollladungsschwelle und
    - den Übergang zu der Ladephase, wenn der Absolutwert der Steilheit (P) unter der Vollladungsschwelle liegt.

**Claims**

1. A method for managing charging of a rechargeable battery, comprising at least one charging phase, said charging phase comprising at least;

    - a charging step by periodic rectangular current pulses (F3) alternately taking a first amplitude (I1) during a first period (t1) and a second amplitude (I2) during a second period (t2), the second amplitude being lower than the first,
    - periodic measurement of the voltage at the battery terminals,
    - calculation, from said voltage measurements, of a slope value (P) representative of the voltage variation versus time, **characterized in that** said charging phase comprises:
    - comparison of the absolute value of the slope (P) at the end of each period (t1, t2) with a predetermined full-charge threshold representative of full charge of the battery,
    - and interrupting said charging step by current pulses (F3) when said absolute value of the slope (P) is greater than or equal to said full-charge threshold.

2. The method according to claim 1, **characterized in that** the full-charge threshold is equal to 300mV/s.

3. The method according to one of claims 1 and 2, **characterized in that** the charging phase comprises a charging step at constant current (F2), before the charging step by current pulses (F3), the absolute value of the voltage slope (P), measured periodically during said charging step at constant current (F2), being compared with a predetermined range, and switching to the charging step by current pulses (F3) taking place when the absolute value of the slope (P) enters said predetermined range.

4. The method according to claim 3, **characterized in that** the predetermined range is comprised between 1 mV/s and 6mV/s.

5. The method according to any ane of claims 1 to 4, **characterized in that** before the charging phase, the method comprises a prior phase of estimating the state of charge of the battery, which comprises:

    - application of a few periodic rectangular test current pulses alternately taking the first amplitude (I4) during the first period (t3) and the second amplitude (I5) during the second period (t4),
    - periodic measurement of the voltage at the battery terminals,
    - calculation, from said voltage measurements, of the voltage slope value (P),
    - comparison of the absolute value of the slope (P) with said full-charge threshold,
    - and switching to charging phase when said absolute value of the slope (P) is lower than said full-charge threshold.

6. A method for managing charging of a rechargeable battery, comprising at least one charging phase and a prior phase of estimating the state of charge of the battery, the prior phase of estimating the state of charge comprising :

    - application of a few periodic rectangular test current pulses alternately taking the first amplitude (I4) during a first period (t3) and the second amplitude (15) during a second period (t4),
    - periodic measurement of the voltage at the battery terminals,
    - calculation, from said voltage measurements, of the voltage slope value (P) representative of the variation of the voltage versus time,
    - comparison of the absolute value of the slope (P) with a predetermined full-charge threshold,
    - and switching to charging phase when said absolute value of the slope (P) is lower than said full-charge threshold.

Figure 1

Figure 2

Figure 3

Estimation d'état de charge
(Fig.7)    F1

Charge à courant I3=cste
tant que P reste en dehors
de la plage
(Fig. 5)    F2

Charge par impulsions de
courant tant que P<300mV/s
(Fig. 6)    F3

Fin de charge    F4

**Figure 4**

**Charge à courant I3=cste tant que P reste en dehors de la plage (F2)**

I = I3=cste — F5

U(t-Δt) = U(t) — F6

Mesure U(t) — F7

Calcul P — F8

1mV/s < P < 6mV/s ? — F9

Non

Oui

**Figure 5**

Charge par impulsions
de courant tant que
P<300mV/s
(Fig. 6)

(F3)

Application d'impulsions de
courant I

F10

Mesures périodiques de U(t)

F11

Calcul P en fin de période
(t1, t2)

F12

F13

Non

|P| > 300mV/s ?

Oui

**Figure 6**

**Figure 7**

**EP 2 087 574 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040032237 A
- WO 2005114808 A
- WO 2005101042 A
- FR 2870391
- WO 2005122319 A